# EUROPEAN PATENT SPECIFICATION

(11) **EP 1 663 747 B1**
(45) Date of publication and mention of the grant of the patent: **05.01.2011**
(21) Application number: 04788540.5
(22) Date of filing: 27.09.2004
(51) Int. Cl.: B60T 7/00, B60T 13/74, B60T 17/18, B60T 17/04, B60D 1/62, B60R 16/04, F16D 65/16

(54) **A BRAKE SYSTEM WITH REDUNDANCY**
BREMSSYSTEM MIT REDUNDANZ
SYSTEME DE FREINAGE A REDONDANCE

(30) Priority: 26.09.2003 SE 0302562
(43) Date of publication of application: 07.06.2006
(73) Proprietor: Haldex Brake Products Aktiebolag, 261 24 Landskrona (SE)
(72) Inventor: NILSSON, Peter, S-286 92 Orkelljunga (SE)
(74) Representative: Karlsson, Leif Gunnar Börje
(86) International application number: PCT/SE2004/001383
(87) International publication number: WO 2005/030522

(56) References cited:
- EP-A2- 0 916 867
- WO-A1-02/49891
- WO-A1-97/36116
- US-A- 5 090 518
- US-B1- 6 179 097
- US-B1- 6 209 966

## Description

The present invention relates to creating redundancy in an electromechanical brake by using at least two units giving actuating force in each separate brake. The solution can be used in an environment where electric energy is regarded as equally safe as mechanical energy (for example in the form of energy stored in a spring in a so called spring brake) in an application where safety is critical. In systems where safety is critical, the safety at catastrophic failures today most often depends on mechanical energy from application springs (spring braking).

EP 0 916 867 shows an electrically operated braking system according to the preamble of claim 1, comprising an electronically operated brake. The electrically operated brake has two electric motors connected to a planetary gear device.

In WO 97/36116 an electromagnetic brake system is described. It has two electric motors to actuate a disc brake. The rotary movements of the electrical motors are superimposed by a threaded roller gear, forming a differential drive system, converting the rotary movements to linear motion.

US 6 179 097 shows a braking device having a spindle gear for actuating a friction brake and a gear drive for driving the spindle gear. It has an electric motor for driving the gear drive. A second electric return motor is arranged for releasing the friction brake.

According to one aspect of the present invention the safety is built up of two (or more) voltage sources and a redundancy in each single brake, where two or more cooperating units together can perform the duty required under normal circumstances. In this way the mechanical application springs may be removed-from the design, leading to the advantage of reduced complexity and improved performance at catastrophic failures.

The brakes may be of a self-energizing type but the invention is not restricted to that kind of brakes. Thus the invention may be used with any type of electromechanical brake.

In each brake each separate unit of the two or more cooperating units is normally supplied by a separate voltage source. At a simple failure one of the two units can perform a possibly reduced function during a possibly reduced period of time.

By the expression "two units" the following may be meant:
a) Two separate motors with two separate shafts and a rotational speed reduction to a brake pad. The brake pad
   may be arranged slidably in relation to a ramp in a self-energizing disc brake as shown in WO 03/071150. In a self-energizing brake it is optimal to dimension the slope of the ramp so that the friction number is close to the number giving theoretical indefinite self-energization. A mechanical slack - together with the characteristics that a self-energizing brake has in this range - create control problems. By having the two motors working "against" each other at these occasions, the slack may be eliminated without costly mechanical solutions for slack minimizing.
b) Two separate motors with two separate shafts and partly common mechanical transmission to the pad ramp.
c) One motor package with thermally and electrically insulated winding packets in the stator portion and a common rotor on a common shaft. Each coil winding can per se perform the function of one motor with the drawback that the loss resistances increase with the decreasing copper volume and thus increase resistive losses, which may limit the time for keeping up the brake function or may limit the effect of the brake function during an indefinite time.
   The invention relates to option c) only.

A system for controlling the two or more cooperating units of each brake may be designed in one of the following ways:
Each motor winding in the above configurations has its one driver supplied by separate voltage sources. The motor control can be performed by two separately supplied control units, each communicating with other parts of the brake system with separate interfaces to separate networks for brake system communication or a generally redundant, voltage supplied control unit communicating with the rest of the brake system by two separate interfaces to two separate networks with two smaller, separately voltage supplied emergency control units connected to each motor drive unit.

According to one aspect of the present invention the power needed to actuate the brake is very low, meaning that the power may be produced in a simple manner giving advantages both regarding weight and cost. - -

Further modifications and advantages of the present invention will be obvious to a person skilled in the art when reading the detailed description below.

The invention will be described more detailed below as way of an example and with reference to the enclosed drawings. In the drawings:
Fig. 1 shows schematically one example of a network topology for both communication and voltage supply in a redundant network for brake control according to the present invention.
Fig. 2 shows schematically one example of parts of a disc brake according to the present invention.

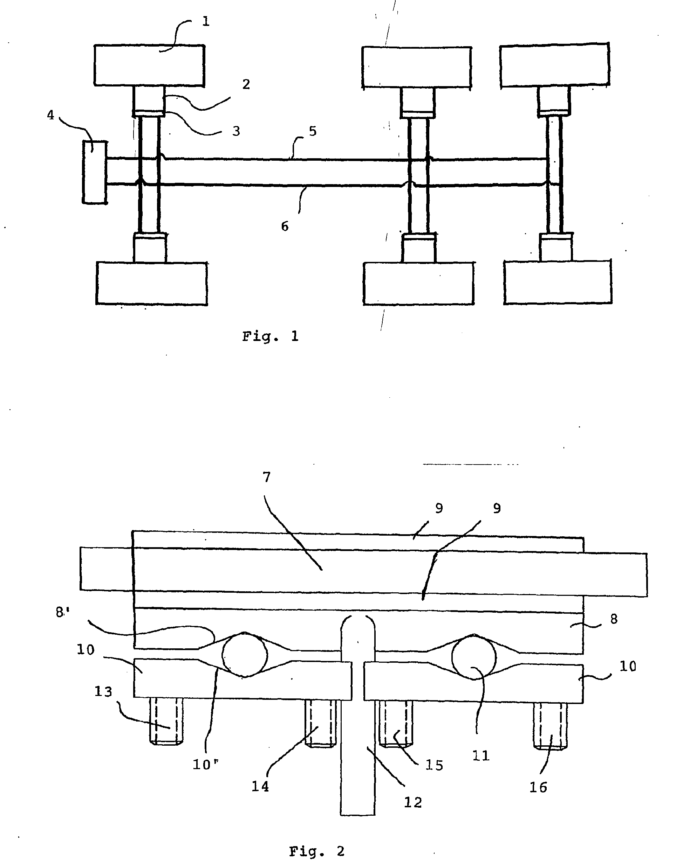

In Fig. 1 one example of a network topology is shown. The shown embodiment is directed to the control function, but a person skilled in the art realizes that the voltage supply part has a similar design.

In the shown embodiment six disc brakes 1 are shown, but a person skilled in the art realizes that any number of brakes may be used. Each disc brake 1 is actuated by means of a drive unit controlled by an electronic control unit 3.
The drive unit comprises at least two separate, cooperating drive units 2. The electronic control unit 3 of each brake 1 is connected to a vehicle control unit 4. As a safe guard the separate electronic control units 3 and the vehicle control unit 4 are connected by means of two separate nets 5, 6. All control units 3, 4 are connected to both nets 5, 6 and thus, even if one net fails the control of the brakes 1 will function by means of the other net.

For the voltage supply to the drive units 2 of each brake 1 two power supplies are provided, one for each of two nets. As stated above the main design of the nets is the same irrespectively of if it is for control or power supply.

In normal use the brakes 1 are actuated by at least two cooperating units 2 for each brake, each unit 2 being capable of actuating the brake 1 on its own in an emergency situation. Thus, this redundancy may be used to safeguard the function of the brakes 1.

In existing brakes a mechanical energy in form of some kind of spring is required mainly due to the parking brake requirements. The mechanical energy is used to compensate for the force lowering effects caused by cooling mechanism and pads. Furthermore, the spring is considered to guarantee a last resort applying the brake if all primary and central energy supply would cease. A total elimination of the mechanical spring from the design would mean cost and above all weight savings. In order to eliminate the spring the parking brake and emergency brake has to be established in some other way. One possible way to achieve this is indicated in Fig. 2.

The mechanism of Fig. 2 is based on the mechanisms shown in WO 03/071150 being self-energizing (self-servo effect). One main difference being the way the wear of the brake pads is compensated.

In the brake indicated in Fig. 2 a brake disc 7 is in normal way received in a caliper or the like (not showed). On one side of the brake disc 7 a ramp plate 8 is provided with a brake pad 9 for braking engagement with the brake disc 7 at will. A further brake pad 9 is often provided on the opposite side of the brake disc 7. The ramp plate 8 is movably connected to two ramp bridges 10.

At their surfaces facing each other, the ramp plate 8 and the ramp bridges 10 are provided with curved or straight ramps 8' and 10', respectively. Two rollers 11 are freely rotatable between the ramps 8', 10'.

In a rest position (or a position for a non-applied brake) the unit comprising the ramp plate 8 (with its brake pad 9), the rollers 11 and the ramp bridges 10 is held with the brake pads 9 at a small distance from the rotating brake disc 7 and with the rollers 11 at the "bottoms" of the ramps 8', 10'.

For brake application, a control force that is substantially transverse to the brake disc 7 (or in other words substantially axial) is applied on the ramp plate 8. In the shown case the force is applied by means of a control rod 12 until contact between the brake pads 9 and the disc 7 is established. The force of the control rod 12 is normally given by the at least two units 2, often being two separate electrical motors. By means of friction force, the ramp plate 8 is transferred to the left or right, depending on direction of rotation of the disc 7, so that the rollers 11 roll up the relevant ramps 8', 10' and an application force is accomplished without applying any external brake force besides the control force. In other words the brake is self-energizing.

In the shown embodiment the ramps 8', 10' are straight, but they can alternatively be curved. By having a certain curvature of the ramps 8', 10', a desired brake application characteristic can be obtained.

The adjustment mechanism compensating for wear of the brake pads 9 is divided onto four screws 13, 14, 15, 16. Two screws 13, 14 are provided for one ramp bridge 10 and two screws 15, 16 for the other ramp bridge 10. The screws 13-16 are preferably ball screws. Screws being non self-locking are of advantage and give a larger freedom in use of the mechanism. By this arrangement the two ramps 8', 10' may be adjusted separately. The four screws 13-16 are to be controlled separately or in pairs in different configurations depending on the function to be brought about. For example the screws 13-16 may be controlled by an energized electromagnet mechanically coupling motion of a motor to the positions of the screws 13-16. In a non-energized condition the positions of the screws 13-16 are locked.

The screws 13-16 may be controlled separately but are often controlled in pairs. By controlling the screws 13-16 the angle of self-energizing may be controlled producing an optimal optimization of energy. With non self-locking screws this adjustment may be made during active braking and forming an optimal optimization of energy.

In this description "angle of the ramp 8', 10'" means the angle of the ramp plate 8 and ramp bridges 10, respectively, in relation to the horizontal plane of the brake disc 7. Thus, the roller 11 may have different angles in relation to the different parts of the ramps 8', 10' and will roll more easily in one direction. "Self-actuating angle" means an angle at which the brake will be actuated automatically if the friction between brake pads 9 and brake disc 8 is above a minimum value.

The dimensions of the motor and its driving may be many times smaller than a design having a fixed angle of self-energizing. This will lead to lower weight and lower costs.

The gear ratio between the driving force of the motors and the screws 13-16 should be high enough for the function of the screws to be slow and power efficient. This means that if the power supply fails the brake may be applied or loosened using little utilized power, as for example with the central generator or small local generators at the separate axles as power supply.

For a self-energizing brake having a fixed angle of the ramps 8', 10' situations will arise that are hard to predict exactly and that demands extremely high powers at extreme values on the friction between pad 9 and disc 7. With a design according to the present invention such extreme situations will be handled at a much lower power requirement. By having the double motors controlled and energized separately and adapted to a safe and double power supply system it will be possible to lower the costs, which is made possible by the substantially lowered power needs.

For a parking brake and/or an emergency brake the angle of the ramps 8', 10' in relation to the disc 7 and the roller 11 may be modified in such a way that every second brake 1 will give a braking effect for travel forward, while the other brakes 1 will give a braking effect for travel backward. This may be done for non self-locking screws in that the angles of the ramps 8', 10' are controlled in pairs to a self-actuating angle, with the screws 13, 15 at the left (as seen in Fig. 2) at the ramp bridges 10 synchronized and the screws 14, 16 at the right synchronized. Then the pad is applied by means of the screws 13-16 to a position which after cooling gives a minimum force >0. By means of the self-actuating angle the brake 1 will apply in one direction of rotation. By setting this angle differently in pairs for the separate brake units half of the brakes 1 will jointly increase the braking power until standstill in the direction of rotation dictated by the slope of the ground.

In an alternative embodiment the angles are varied in such a way that half the braking effect of each brake 1 is acting for brake of travel forward while the other half of the braking effect is used for braking travel backward. With non self-locking screws the angles of the ramps 8', 10' are controlled in pairs with the screws 13, 16 at the outer ends of the ramp bridges 10 synchronized and the screws 14, 15 at the inner ends synchronized. Outer and inner ends being in relation to the axis of rotation of the brake disc 7. Hereby the left ramp (as seen in Fig. 2), controlled by the two screws 13, 14 on the left, has a self-energizing effect in a forward direction of the vehicle and the right ramp, controlled by the two screws 15, 16 on the right, has a self-energizing effect in a backward direction of the vehicle. Thus, the brake pads 9 are applied by means of the screws 13-16 to a position that still after cooling gives a minimum force >0.

As an alternative the angles of the ramps 8', 10' are kept constant, even if the ramp plate 8 and ramp bridges 10 are inclined in relation to the brake disc 7. By such an arrangement the parking and/or emergency brake will function irrespectively of direction of travel of the vehicle.

## Claims

1. A brake system, wherein each single brake (1) has a redundancy regarding activation and that at least two drive units (2) are provided at each single brake for activation of the brake (1), **characterized in that** the at least two units (2) are one motor package with thermally and electrically insulated winding packets in a stator portion and a common rotor on a common shaft.

2. The brake system of claim 1, **characterized in that** the at least two units (2) at each brake are energized and/or controlled separately.

3. The brake system of claim 2, **characterized in that** the energy source and/or control systems are formed in two nets (5, 6), whereby the units (2) of each brake (1) are connected to separate nets (5, 6).

4. The brake system of any of the claims 1-3, **characterized in that** each motor winding has its own driver supplied by separate voltage sources.

5. The brake system of claim 4, **characterized in that** the motor control is performed by two separately supplied control units (3), each communicating with other parts of the brake system with separate interfaces to separate networks for brake system communication.

6. The brake system of claim 4, **characterized in that** the motor control is performed by a generally redundant, voltage supplied control unit communicating with the rest of the brake system by two separate interfaces to two separate networks with two smaller, separately voltage supplied emergency control units connected to each drive unit (2).

7. The brake system of claim 1, **characterized in that** each brake (1) is a self-energizing brake having a ramp plate (8) provided with a brake pad (9) for braking engagement with a brake disc (7), the ramp plate (8) being movably connected to two ramp bridges (10), and that at their surfaces facing each other, the ramp plate (8) and the ramp bridges (10) are provided with ramps (8', 10') and two rollers (11) freely rotatable between the ramps (8', 10').

8. The brake system of claim 7, **characterized in that** an angle of the ramps (8', 10') in relation to the brake disc (7) may be altered.

9. The brake system of claim 7, **characterized in that** the inclination of the ramp bridges (10) and/or the ramp plate (8) in relation to the brake disc (7) is variable.

10. The brake system of claim 9, **characterized in that** the ramp plate (8) and the ramp bridges (10) are inclined synchronously keeping the angles of the ramps (8', 10') constant in relation to the rollers (11).

11. The brake system of claim 7, **characterized in that** two screws (13, 14, 15, 16) are provided at each ramp bridge (10), one at each end of the ramp bridge (10), to control the position of each ramp bridge (10).

12. The brake system of claim 11, **characterized in that** the screws (13-16) are controlled separately.

13. The brake system of claim 11, **characterized in that** the screws (13-16) are controlled in pairs to alter the angle of the ramps (8', 10') and thereby the self-locking angle of the ramps (8', 10').

14. The brake system of claim 8, **characterized in that** the screws (13-16) are ball screws.

## Patentansprüche

1. Bremssystem, bei dem jede einzelne Bremse (1) Redundanz bezüglich Aktivierung aufweist und mindestens zwei Antriebseinheiten (2) für jede einzelne Bremse zur Aktivierung der Bremse (1) vorgesehen sind, **dadurch gekennzeichnet, dass** die mindestens zwei Einheiten (2) ein Motorkörper mit thermisch und elektrisch isolierten Wicklungspaketen in einem Statorteil und einem gemeinsamen Rotor auf einer gemeinsamen Welle sind.

2. Bremssystem nach Anspruch 1, **dadurch gekennzeichnet, dass** die mindestens zwei Einheiten (2) an jeder Bremse getrennt erregt und/oder gesteuert werden.

3. Bremssystem nach Anspruch 2, **dadurch gekennzeichnet, dass** die Energiequelle und/oder Steuersysteme in zwei Schaltkreisen (5, 6) gebildet sind, wobei die Einheiten (2) jeder Bremse (1) an getrennte Schaltkreise (5, 6) angeschlossen sind.

4. Bremssystem nach einem der Ansprüche 1 bis 3, **dadurch gekennzeichnet, dass** jede Motorwicklung ihren eigenen, von einer separaten Spannungsquelle gespeisten Treiber aufweist.

5. Bremssystem nach Anspruch 4, **dadurch gekennzeichnet, dass** die Motorsteuerung von zwei separat gespeisten Steuereinheiten (3) ausgeführt wird, die jeweils mit anderen Teilen des Bremssystems über getrennte Schnittstellen zu getrennten Schaltkreisen für die Bremssystem-Kommunikation kommunizieren.

6. Bremssystem nach Anspruch 4, **dadurch gekennzeichnet, dass** die Motorsteuerung durch eine allgemein redundante, spannungsgespeiste Steuereinheit durchgeführt wird, welche mit dem Rest des Bremssystems über zwei getrennte Schnittstellen bezüglich zwei getrennten Schaltkreisen mit zwei kleineren, getrennt mit Spannung gespeisten Notsteuereinheiten, die an jede Treibereinheit (2) angeschlossen sind, kommuniziert.

7. Bremssystem nach Anspruch 1, **dadurch gekennzeichnet, dass** jede Bremse (1) eine selbstverstärkende Bremse mit einer Auflaufplatte (8), die mit einem Bremsbelag (9) für den Bremseingriff an einer Bremsscheibe (3) ausgestattet ist, wobei die Auflaufplatte (8) bewegbar mit zwei Rampenbrücken (10) gekoppelt ist, und dass ihre Oberflächen einander zugewandt sind, wobei die Auflaufplatte (8) und die Rampenbrücken (10) mit Auflaufflächen (8', 10') ausgestattet sind, zwischen denen zwei Wälzkörper (11) frei drehbar vorgesehen sind.

8. Bremssystem nach Anspruch 7, **dadurch gekennzeichnet, dass** der Winkel der Auflauffläche (8', 10') in Bezug auf die Bremsscheibe (7) geändert werden kann.

9. Bremssystem nach Anspruch 7, **dadurch gekennzeichnet, dass** die Neigung der Rampenbrücken (10) und/oder der Auflaufplatte (8) in Bezug auf die Bremsscheibe (7) veränderlich ist.

10. Bremssystem nach Anspruch 9, **dadurch gekennzeichnet, dass** die Auflaufplatte (8) und die Rampenbrücken (10) synchron geneigt werden, wobei die Winkel der Auflaufflächen (8', 10') in Bezug auf die Wälzkörper (11) synchron konstant gehalten werden.

11. Bremssystem nach Anspruch 7, **dadurch gekennzeichnet, dass** an jeder Rampenbrücke (10) zwei Schrauben (13, 14, 15, 16) vorgesehen sind, wobei eine Schraube an jedem Ende der Rampenbrücke (10) vorgesehen ist, um die Lage der Rampenbrücke (10) zu steuern.

12. Bremssystem nach Anspruch 11, **dadurch gekennzeichnet, dass** die Schrauben (13-16) separat gesteuert werden.

13. Bremssystem nach Anspruch 11, **dadurch gekennzeichnet, dass** die Schrauben (13-16) paarweise gesteuert werden, um den Winkel der Auflaufflächen (8', 10') und damit den Selbstsperrwinkel der Auflaufflächen (8', 10') zu ändern.

14. Bremssystem nach Anspruch 8, **dadurch gekennzeichnet, dass** die Schrauben (13-16) Kugelschrauben sind.

## Revendications

1. Système de freinage, dans lequel chaque frein individuel (1) a une redondance pour ce qui concerne l'actionnement et au moins deux unités d'actionnement (2) sont disposées au niveau de chaque frein individuel pour l'actionnement du frein (1), **caractérisé en ce que** les au moins deux unités (2) sont un groupe moteur avec des paquets d'enroulements isolés thermiquement et électriquement dans une partie de stator et un rotor commun sur un arbre commun.

2. Système de freinage selon la revendication 1, **caractérisé en ce que** les au moins deux unités (2) au niveau de chaque frein sont alimentées et/ou commandées séparément.

3. Système de freinage selon la revendication 2, **caractérisé en ce que** les systèmes de source d'énergie et/ou de commande sont formés en deux réseaux (5, 6), moyennant quoi les unités (2) de chaque frein (1) sont connectées à des réseaux séparés (5, 6).

4. Système de freinage selon l'une quelconque des revendications 1 à 3, **caractérisé en ce que** chaque enroulement de moteur a son propre dispositif de contrôle alimenté par des sources de tension séparées.

5. Système de freinage selon la revendication 4, **caractérisé en ce que** la commande de moteur est effectuée par deux unités de commande alimentées séparément (3), chacune communicant avec d'autres parties du système de freinage avec des interfaces séparées vers des réseaux séparés pour la communication du système de freinage.

6. Système de freinage selon la revendication 4, **caractérisé en ce que** la commande de moteur est effectuée par une unité de commande alimentée en tension, généralement redondante, communiquant avec le reste du système de freinage par deux interfaces séparées vers deux réseaux séparés avec deux unités de commande de secours plus petites, alimentées séparément en tension, connectées à chaque unité d'actionnement (2).

7. Système de freinage selon la revendication 1, **caractérisé en ce que** chaque frein (1) est un frein à auto-serrage ayant une plaque à rampe (8) munie d'une plaquette de frein (9) pour l'engagement de freinage avec un disque de frein (7), la plaque à rampe(8) étant connectée de manière mobile à deux ponts à rampe (10), et **en ce que**, au niveau de leurs surfaces se faisant face, la plaque à rampe (8) et les ponts à rampe (10) sont munis de rampes (8', 10') et de deux rouleaux (11) tournant librement entre les rampes (8', 10').

8. Système de freinage selon la revendication 7, **caractérisé en ce qu'**un angle des rampes (8', 10') par rapport au disque de frein (7) peut être modifié.

9. Système de freinage selon la revendication 7, **caractérisé en ce que** l'inclinaison des ponts à rampe (10) et/ou de la plaque à rampe (8) par rapport au disque de frein (7) est variable.

10. Système de freinage selon la revendication 9, **caractérisé en ce que** la plaque à rampe (8) et les ponts à rampe (10) sont inclinés en synchronisme en maintenant constants les angles des rampes (8', 10') par rapport aux rouleaux (11).

11. Système de freinage selon la revendication 7, **caractérisé en ce que** deux vis (13, 14, 15, 16) sont disposées au niveau de chaque pont à rampe (10), une à chaque extrémité du pont à rampe (10), pour contrôler la position de chaque pont à rampe (10).

12. Système de freinage selon la revendication 11, **caractérisé en ce que** les vis (13-16) sont commandées séparément.

13. Système de freinage selon la revendication 11, **caractérisé en ce que** les vis (13-16) sont commandées par paires pour modifier l'angle des rampes (8', 10') et ainsi l'angle d'auto-serrage des rampes (8', 10').

14. Système de freinage selon la revendication 8, **caractérisé en ce que** les vis (13-16) sont des vis à bille.
